(19) Europäisches Patentamt
European Patent Office
Office européen des brevets

(11) **EP 2 587 443 A1**

(12) **EUROPEAN PATENT APPLICATION**

(43) Date of publication:
**01.05.2013 Bulletin 2013/18**

(51) Int Cl.:
***G06Q 50/00*** *(2012.01)*    ***G06Q 30/00*** *(2012.01)*

(21) Application number: **11306372.1**

(22) Date of filing: **24.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus**
**06410 Biot (FR)**

(72) Inventors:
• **Cazeaux, Olivier**
  **06160 Juan les Pins (FR)**

• **Boyadji , Cyril**
  **06210 Mandelieu la Napoule (FR)**
• **Tran, Bertrand**
  **06600 Antibes (FR)**
• **Pioger,  Aurélien**
  **06600 Antibes (FR)**
• **Ambolet , Patrice**
  **06560 Valbonne (FR)**

(74) Representative: **Decobert, Jean-Pascal**
  **Cabinet Hautier**
  **20, rue de la Liberté**
  **06000 Nice (FR)**

(54)    **Global maximization of time limit revenues by a travel provider**

(57)    The invention relates to a computer-implemented method and system to generate travel booking option related data, comprising a step of calculating a time limit value for an option to reserve a travel reservation for some period of time, without making a payment to issue a ticket, and also calculating an option fee amount, where the time limit value and the option fee amount are jointly calculated to maximize a revenue gain of the travel provider.

FIGURE 1

**Description**

TECHNICAL FIELD:

The exemplary embodiments of this invention relate generally to travel reservation and booking methods and systems and, more specifically, relate to computer-implemented inventory systems, revenue management systems and reservation systems used in the travel industry, and even more specifically relate to methods and systems related to time management and revenue integrity functions.

BACKGROUND:

Certain terms used in the following description are defined as follows:

- O&D: Origin and Destination (also referred to herein as OnD), determined by the Inventory system and used for making an Availability calculation. O&Ds can be distinguished as those that are single segments and "multiple-Segments", i.e., O&Ds made up of a sequence of at least two distinct connecting flight-segments (i.e. with distinct flight numbers).
- Availability: This is the number of seats available for sale in a specific (sub) class, on a single segment or for an O&D Itinerary. It is used to accept or deny further bookings in that class.
- Bid Price: A net value (Bid Price) for an incremental seat on a particular flight/leg/cabin in the airline network. The Bid Price is the marginal value of a given flight/cabin/leg, also referred to as minimum acceptable net revenue, hurdle price, shadow price, displacement cost, or dual cost. The Bid Price is the minimum revenue at which the airline wishes to sell the next seat.
- Booking Class: This is a marketing segmentation used for reservations control (directly related to a fare). Traditionally a Booking Class gathers bookings made for the same kind of product (e.g., 14 days advance purchase booking, non-refundable bookings, etc.), and is designated by a one letter code.
- Cabin: Physical section of a transport apparatus (aircraft, train, bus, boat, etc.) such as First Class or Economy (Eco).
- Demand Categorization: Indicates if the customer is price-oriented meaning booking the best fare available, or if the customer is product-oriented, booking a product or service although lower fares exist on the same segment date cabin.
- Effective Yield: O&D Yield minus the sum of all leg/cabin Bid prices crossing the O&D.
- PNR: Passenger Name Record, a record in a database of a computer reservation system that contains, among other data, the itinerary for a passenger or a group of passengers.
- Segment: One or more legs sharing the same commercial transportation number, typically the same commercial flight number in the case that the segment is an air segment. A segment is a saleable product.
- Time-to-Ticket Willingness (TTW): The average Time-to-Ticket for a given population of passengers, i.e., the willingness of passengers to have a ticket issued (to confirm/pay for a specific travel product, not limited to an air segment).
- Yield: The Yield is defined for each Class of a given OnD date. The Yield is an estimation of how much revenue the carrier (e.g., airline) receives from a sale in the associated Class.

Figure 11 is a graph that is useful in understanding the relationships between Yield, number of Remaining Seats, Capacity, Bid Price, Bid Price Curve and the determination of Availability.
The following discussion will be primarily in the context of an airline being a travel provider (carrier). However, and as should be apparent from the foregoing definitions of various terms, an airline is one non-limiting type of travel provider.
A goal of a Revenue Integrity System is to ensure that passengers travel within the conditions applied to the purchased fare. In other words, the Revenue Integrity System ensures that the correct passenger(s) travel on the correct flight at the correct fare.
Airlines have the ability to manage their Revenue Integrity due at least in part to time limits that apply an expiration date/time to eligible bookings, services, seats, etc.
On one hand the Revenue Integrity System enables the airline to release airline inventory from unproductive bookings, chargeable services/seats, quota-based services, etc., thereby providing for the possibility for a new sale or an up-sale (up-sell) to occur.
Airlines have defined commercial products to generate revenues based upon time limits. These products can be for instance 'Time to Think' or 'On-Hold Seat' options where, for a fee, payment for a booking may be delayed for a specified period of time. For example, a potential passenger can book a seat on a flight but not pay, meaning the flight segment is unticketed, and for the payment of some additional fee (e.g., 10 euros/USD) the reservation is guaranteed by the airline for some period of time set by the airline. In general, by default a customer will have some limited amount of time to ticket according to the travel provider ticketing policy. The payment of the addition fee can extend the initial period that is provided by default (without cost to the customer).

WO-A1-98/29840: "Method, Apparatus and Program for Pricing, Selling, and Exercising Options to Purchase Airline Tickets" describes a system and method for determining a price of an option to purchase an airline ticket, and for facilitating the sale and exercise of the options. By purchasing an option a customer can lock in a specified airfare without tying up his money and without risking the loss of the ticket price if his travel plans change. As described the pricing of the options may be based on departure location criteria, load factor, destination location criteria, and travel criteria.

On the other hand the goal of a Revenue Management System is to sell the right seat at the right price, at the right time to the right customer. The Revenue Management System provides the Inventory System of the airline with recommendations on how to sell the seats in order to maximize the revenue of the airline. The recommendations are based generally on forecasted demand. However, the Revenue Management System does not take into account the revenue generated by the sale of additional time (option fees) and the subsequent revenue that results from the use of the above-described time limit-based commercial products.

More importantly, conventional technique do not consider a determination of an optimum time limit, nor does it take into account the influence of the time limit fee on the airline's overall revenue

A problem that arises is how to ensure that this source of revenue is automatically and accurately taken into account in a global maximization of the airline's revenues. This also applies to other travel providers.

SUMMARY

The foregoing and other problems are overcome, and other advantages are realized, in accordance with the embodiments of this invention.

In a first aspect thereof this invention provides a computer-implemented method to generate travel booking option related data, comprising a step of:

calculating a time limit value for an option to reserve a travel reservation for some period of time, without making a payment to issue a ticket, and also calculating an option fee amount, where the time limit value and the option fee amount are jointly calculated to maximize a revenue gain of the travel provider.

The exemplary embodiments also encompass a non-transitory computer-readable medium that contains software program instructions, where execution of the software program instructions by at least one data processor results in performance of operations that comprise execution of the method.

In a further aspect thereof this invention provides a computer-implemented travel reservation and booking system comprising:

- an Inventory System having an input coupled to a Reservation System to receive an inquiry from the Reservation System and further having an output coupled to the Reservation System to provide a response to the inquiry, said Inventory System further being bi-directionally coupled to a Time Management System, where
- each of said Inventory System and said Time Management System comprises at least one data processor operating under control of software instructions stored in at least one memory, where said at least one data processor of said Time Management System is configured to calculate a time limit value for an option to reserve a travel reservation for some period of time, without making a payment to issue a ticket, and to also calculate an option fee amount, where the time limit value and the option fee amount are jointly calculated to maximize a revenue gain of the travel provider; and , where said at least one data processor of said Inventory System is configured to respond to an inquiry for a travel reservation to offer to reserve the travel reservation for the calculated time limit value and for the option fee amount.

In yet another aspect thereof this invention provides a non-transitory computer-readable medium that stores a data structure. The data structure is comprised of a plurality of Time Limit Policies associated with options offered by a travel provider to reserve a travel reservation for some period of time without making a payment to issue a ticket, each Time Limit Policy comprising an application portion and a content portion, the content portion being comprised of a couple (Time Limit, Option Fee) for use in responding to an inquiry for a travel reservation, where an inquiry that matches an application portion of one of the Time Limit Policies in the database returns from the content portion of the matching Time Limit Policy a time limit value and an option fee amount that were jointly calculated to maximize a revenue gain of the travel provider.

The exemplary embodiments also encompass a computer-implemented method to receive travel reservation related data in response to an inquiry for a travel reservation, comprising the following steps performed at a user terminal connected to a communication network:

- inputting through a graphical user interface of the user terminal query data associated with a travel reservation,
- sending through the network an inquiry for a travel reservation comprising the query data,
- receiving a response to the inquiry, the response comprising a time limit value for an option to reserve a travel reservation for some period of time and an option fee amount, where the time limit value and the option fee amount depend on criteria values matching the query data.

In a further aspect thereof this invention provides a user terminal providing a user with a graphical user interface, the user terminal being connected to a communication network and being configured to perform the following steps:

- inputting through a graphical user interface of the user terminal query data associated with a travel reservation,
- sending through the network an inquiry for a travel reservation comprising the query data,
- receiving a response to the inquiry, the response comprising a time limit value for an option to reserve a travel reservation for some period of time and an option fee amount, where the time limit value and the option fee amount depend on criteria values matching the query data.

Typically, the user terminal may be any one of a personal computer, a smart phone, a personal digital assistant and a terminal located in any one of an airport, a train station, a travel agency and a shop.

BRIEF DESCRIPTION OF THE DRAWINGS

The foregoing and other aspects of the embodiments of this invention are made more evident in the following Detailed Description, when read in conjunction with the attached Drawing Figures, wherein:

- Figure 1 shows a block diagram of the integration of the Time Management System in the travel reservation framework. Figure 2 depicts an issuance of new bookings after a cancellation.
- Figure 3 shows Time Limit Policies (TLPs) and the extraction of historical data.
- Figure 4 shows a repartition of Time-to-Ticket Willingness (TTWs) using a 3-dimensional representation.
- Figure 5 depicts a definition of TLPs through a Criteria Selection Algorithm.
- Figure 6 illustrates different sources of Time Limit (TL) revenues.
- Figure 7 presents an example of duration zones division in days to departure.
- Figure 8 shows an example of a Gain Revenue representation and the determination of a couple (TL, Fee) which maximizes the Time Limit revenue.
- Figure 9 shows an example of TLP historical data capture criteria and corresponding estimated TTWs.
- Figure 10 shows an example of TLP (set of criteria values and associated content).
- Figure 11 is a graph that is useful in understanding the relationships between Yield, a number of Remaining Seats, Capacity, Bid Price, Bid Price Curve and the determination of Availability.
- Figure 12 is a graph that illustrates the digressive nature of a customer's deposit over a period of time.

DETAILED DESCRIPTION

A non-limiting aspect of the embodiments of this invention relates to a Global Maximization of travel provider's Revenues by providing an optimum Time Limit at an optimum price amount (here called option fee amount).
The present invention provides a technique to determine the best Time Limit and the best associated price policy that maximizes not only Time Limit Revenues of the travel provider but also the other gains of the provider comprising the revenue gains in providing tickets for travel reservations. Aspects of this process include, but are not limited to, recycling unproductive space for sale and up-sale (up-sell) and selling time as an option.
The present invention provides a capability to unify Revenue Integrity and Revenue Management to achieve a global maximization considering a chargeable dimension of the Time Limit combined with the Time Limit itself, the revenue generated by the sell of tickets in classes available after the time limit is reached and the booking cancelled (this can be a lowest available class, usually at higher price than the original reservation corresponding to the option; this may lead to up-sell strategies for the provider), and the recycling of unproductive bookings.
To achieve this Global Maximization of Revenues using time limits the invention provides a novel Revenue Function that takes into account data coming from both historical and live (current, real-time) Inventory System and Reservation System data. Multi-dimensional optimization techniques are then used to provide the best Time Limit at the best price. The invention further provides a novel Time Management System that forms a framework wherein the optimization is performed, based on historical and live Inventory System and Reservation System data that is input on a frequent basis.

The exemplary embodiments of this invention provides a novel Time Management System implementation capable of computing on a frequent basis, or on demand, various Time Limit Policies based on live and historical Reservation System and Inventory System data, including forecasted data from the Revenue Management System. Defined Time Limit Policies are then pushed to the Inventory System in order to globally maximize the revenue of the airline.

Upon request from the Reservation System, the Inventory System can interactively propose in real-time a computed Time Limit and an associated Fee to the user.

The present invention interactively provides a user with value of the Time Limit and its associated Fee.

The fee can be collected by the travel provider either at the time the reservation is made, or it can represent a deposit of the amount due for the travel or service the customer is booking.

The deposit can be digressive during the life of the option. When the time limit is reached, the booking is cancelled as shown in Figure 12, but the customer can benefit from a credit for a rebooking on the same itinerary or service, or on another itinerary or service. The credit can be a non zero proportion of the option fee amount.

Exemplary embodiments of the invention may comprise the non-limiting options which are introduced hereafter and which will be explained with more details later in the description.

The method comprises the steps of:

- establishing a plurality of criteria associated with travel bookings of a travel provider;
- defining a group of criteria values, where each of said criteria is selected among the plurality of criteria and where each criteria value is a value of one of said criteria for some of the travel bookings;
- computing the time limit value and the option fee amount based on the group of criteria values;
- the plurality of criteria comprises one or more of at least Point of Sale, Frequent Flyer Tier Level, Origin and Destination, Demand Categorization and Load Factor;
- the step of defining a group of criteria values and the step of computing the time limit value and the option fee amount are repeated for plural groups of criteria values;
- the time limit values and the option fee amounts are calculated to maximize a global revenue gain of the travel provider, said revenue gain comprising the revenue gain in providing options and in providing travel reservation tickets
- the plurality of criteria are derived from Reservation-related data, Inventory-related data and Revenue-related data;
- the method is further comprising the steps of:
- creating a Time Limit Policy for each group of criteria values;
- for each Time Limit Policy:

    i) determining an application portion of said Time Limit Policy where said application portion comprises at least some of the values of said group of criteria values;
    ii) determining a content portion of said Time Limit Policy where the content portion comprises the time limit value and the option fee amount computed for said group of criteria values;

- the method further comprises storing the Time Limit Policies in a database that is accessible by an inventory system of the travel provider;
- the group of criteria values is used at least in part to estimate a willingness of a passenger to confirm/pay for the booking;
- the estimation of the willingness of a passenger to confirm/pay for the booking is performed using an unconstraining algorithm;
- calculating is performed separately for at least two consecutive periods prior to a departure date each having a different estimated willingness of a passenger to confirm/pay for the booking;
- calculating is comprised of estimating a Time-to-Ticket Willingness (TTW) for individual ones of sets of historical data, each set of historical data being for one single period;
- the historical data is comprised of, for a particular group of criteria values, tickets issued after an original booking was cancelled by a time limit expiring and the inventory space released, and determining the application portion is comprised of building a multi-dimensional space of TTWs that represent ticket issuance occurrence probabilities, and selecting Time Limit Policies with the highest probability to occur and the average associated TTW, and determining the content portion is comprised of estimating a best couple (Time Limit value, Option Fee amount) which maximizes future revenue gain of the travel provider
- estimating the Time-to-Ticket Willingness (TTW) comprises an initial step of correlating different subsets of Reservation System and Inventory System data using different types of passenger-related information data;
- the types of passenger-related information data comprise one or more of at least passenger names, frequent flyer data, and passenger-related personal informational data, and correlated bookings and associated tickets represent unconstrained data used by an Unconstraining Algorithm for estimating the Time to Ticket Willingness;

- the travel provider is an airline, and calculating is comprised of:
- selecting a group of criteria values for a defined time duration zone;
- for each flight associated with a date within the time duration zone:

  i) sorting tickets that comprise historical data based on associated bookings;
  ii) restricting to a single class of service from a plurality of classes of service and estimating a gain in revenue for the single class of service; and
  iii) computing an overall gain in revenue as an average of the gain in revenue from each of the classes of service;

- calculating comprises placing one or more constraints on time limit value and option fee amount in order to more quickly perform the calculation;
- the time limit value and the option fee amount are updated periodically or upon request of an administrator;
- calculating is performed at a Time Management System, and the method is comprising, periodically or upon request of an administrator, sending data from an Inventory System of the travel provider to the Time Management System comprising Reservation-related data, Inventory-related data and Revenue-related data from which the plurality of criteria are derived;
- the method comprises sending periodically or upon request of an administrator data from the Time Management System to the Inventory System comprising calculated time limit values and option fee amounts for storage at the Inventory System for use in responding to inquiries for travel reservation;
- the method is further comprising, in response to an inquiry for a travel reservation for a passenger, offering to reserve the travel reservation for the calculated time limit value and for the option fee amount;
- the step of calculating is performed in an offline mode and offering to reserve the travel reservation is performed in real time upon reception of the inquiry;
- the method is comprising:

  - receiving an inquiry for a travel reservation at the inventory system;
  - deriving inquiry parameters from the inquiry;
  - retrieving from the database the content portion of a time limit policy having an application portion matching the inquiry parameters;
  - returning from said content portion the calculated time limit value and the option fee amount.

- it further comprises:

  - generating an option for the calculated time limit value and for the option fee, and;
  - when the time limit value is reached, cancelling the travel reservation, and;
  - crediting a user with an amount representing a proportion of the option fee;

- the system may be such that calculating is performed at said Time Management System in an off-line manner and results of the calculating are stored in a database that is accessible by said at least one data processor of said Inventory System where the inquiry is received at said Inventory System from said Reservation System in a real-time manner, and said Inventory System periodically sends data to said Time Management System comprising Reservation-related data, Inventory-related data and Revenue-related data from which the time limit value and the option fee amount are calculated; and said Time Management System periodically sends data to said Inventory System comprising calculated time limit values and option fee amounts for storage in said database at said Inventory System for use in responding to real-time booking inquiries;
- the travel provider is an airline, and the plurality of criteria for calculating the time limit value and the option fee value comprise one or more of Point of Sale, Frequent Flyer Tier Level, Origin and Destination, Demand Categorization and Load Factor; the query data comprise one or more of at least Frequent Flyer Tier Level, Origin and Destination, Demand Categorization.

The invention can be used with any travel product distribution channels. This includes conventional travel agencies for the provision of time limit values and fee amounts to an agent. This also concerns online travel agencies accessible by any kind of users such as clients. In addition, the invention can provide with time limit values and option fee amounts at various stages of an interaction process between the user and the rest of the system.

In a first example, an inquiry for an option is triggered upon simple display of travel solutions to the user without even price or availability data. The calculation may also be launched after the user has selected one travel solutions among others and had accessed to more information related to that travel solution, for example after a pricing of the travel product. In a third non limiting example, the option calculation occurs at a later stage, when the user is invited to enter personal data to complete the reservation. The later case is usually advantageous since the system can then base its computation on a maximized set of information such as information about the traveler that may not be available in previous examples. In summary, the inquiry for travel reservation which leads to the calculation of the time limit value and of the option fee amount may concern any travel request flows such as shopping, booking or service requests.

The invention preferably provides with a graphical user interface GUI for the user to have the ability to trigger the calculation of the option in at least one stage of his/her computer session. At least one window of the GUI may include a clickable button triggering the calculation of the option. Another button may be provisioned to alternatively trigger the booking of the travel reservation. The invention is thus not limited to incorporation in a full booking process and can be used in a way separate from a typical booking flow. The inquiry launching the calculation may directly emanate from a remote user such as a client or an agent. This may also be an internal message flow between two parts of the system. In the later case, for instance, the inquiry may be triggered by a reservation system to an inventory system upon receipt of a travel query from a remote user, said query potentially being for reservation of a travel product.

To achieve the computation of the time limit and fee data the system compiles, on a frequent basis, a database of Time Limit Policies (TLP) (which can consist in rules) that is travel-provider-oriented. In response to an inquiry, the system later applies a specific content of one Time Limit Policy when the application portion of said TLP (i.e: a section of the TLP which specified under which conditions the TLP applies) is matching a specific set of inquiry parameters. The inquiry parameters may comprise end user or traveller query data (such as frequent flyer data) but may also comprise system-determined data (such as the Point of Sale corresponding to the user's location, demand categorization, load factor... ).

For the construction of the TLPs, the invention uses travel bookings of the provider and defines a plurality of criteria that are relevant for the assessment of the time limit and which can help categorize the travel bookings in several sets. At least some of these criteria are used and valued for some travel bookings to build groups of travel bookings sharing same criteria values. Each group of criteria values is thus corresponding to a group of travel bookings. Each group of bookings may reflect one traveller behaviour. Each group of criteria values is then used to build a TLP. The application portion of the TLP corresponds to at least some of the criteria value of the group and comprises preferably all the criteria values of the group. The content portion of the TLP is computed from the criteria values.

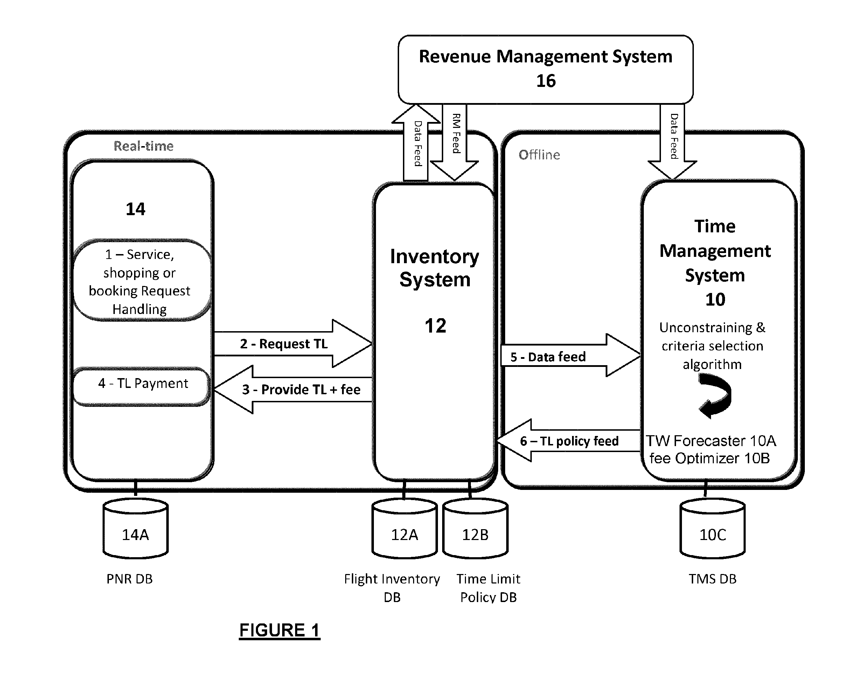

Turning now to the illustrated embodiments, the TLP computation is handled within the Time Management System 10 shown in Figure 1. The Time Management System 10 is connected with an Inventory System 12. The Inventory System 12 in turn is connected with a Reservation System 14 and is also connected to the Revenue Management System 16. The Time Management System 10 includes a TTW Forecaster 10A that estimates the TTW based on historical data received from the Inventory System 12 through a data feed and a TL and Fee Optimizer 10B that determines the relevant criteria from which the application portion and content (Time Limit and Fee) of the Time Limit Policies derive. The Time Management System 10 is assumed to be connected to a database 10C. The Inventory System 12 includes a Flight Inventory database 12A and a Time Limit Policy database 12B. The Reservation System 14 includes a PNR database 14A. The Time Management System 10 may be considered to be an offline system, while the Inventory System 12 and the Reservation System 14 may be considered to function as real-time, dynamically operating systems.

The various numbered events and message flows shown in Figure 1 are now described.

(1) Service, shopping or booking Request Handling: An action that is eligible for a Time Limit computation is performed in the Reservation System 14 (e.g., a Segment sell, Group name assignment, change of booking status, special service request (SSR), seat request, etc.)

(2) Request Time Limit (TL): A TL Request is sent to the Inventory System 12 to obtain a couple (Time Limit, Option Fee).

(3) Provide the couple (Time Limit + Option fee): A Time Limit and its associated Fee are returned to the Reservation System 14. These data result from the real-time application of the TLP matching the parameters of the Service Request Handling of (1). The data provided to the Reservation System 14 are predetermined by the Time Management System 10 to globally maximize the travel provider (e.g., airline) revenue. The couple (Time Limit + Option fee) can be provided alone or in addition to a priced travel solution offered for reservation.

(4) Time Limit payment: If accepted, the Option Fee is paid by the customer.

(5) Data feed: A data feed is periodically sent from the Inventory System 12 for storage in the database 10C of the Time Management System 10. The feed contains Reservation-related data (e.g., Booking Date/Time, Booking Class, Point of Sale (POS), Flight Date Information, Form of Payment, Ticketing Date, etc.) and Inventory-related data (e.g., Load Factor, Origin and Destination (O&D) and Revenue oriented data such as Effective Yield, Demand Categorization, etc.)

(6) Time Limit (TL) Policy feeds: A data feed is periodically sent from the Time Management System 10 to the Inventory System 12 for storage in the Time Limit Policy database 12B. The Time Limit Policy database 12B is accessed when there is a service request eligible for a Time Limit computation. The Time Limit Policy database 12B contains a data structure comprised of data that is predetermined by the Time Management System 10 to globally maximize the revenues of the airline associated with the Inventory System 12.

To build the Time Limit Policy database 12B, the Time Management System 10 applies the following algorithm:

1. Estimate the Time-to-Ticket Willingness (TTW).

    a. Capturing unconstrained data in historical data by cross-referencing the customer behaviour through the entire booking flow.
    b. Using an Unconstraining Algorithm for each set of historical data (there is advantageously one set per duration zone). General reference with respect to unconstraining algorithms can be made to, for example, "Improved Forecast Accuracy in Airline Revenue Management by Unconstraining Demand Estimates from Censored Data", Richard H.Zeni, 2001, pp. 56-101.

2. Then, in sequence,

    a. Build the application portion of the Time Limit Policies (TLPs);

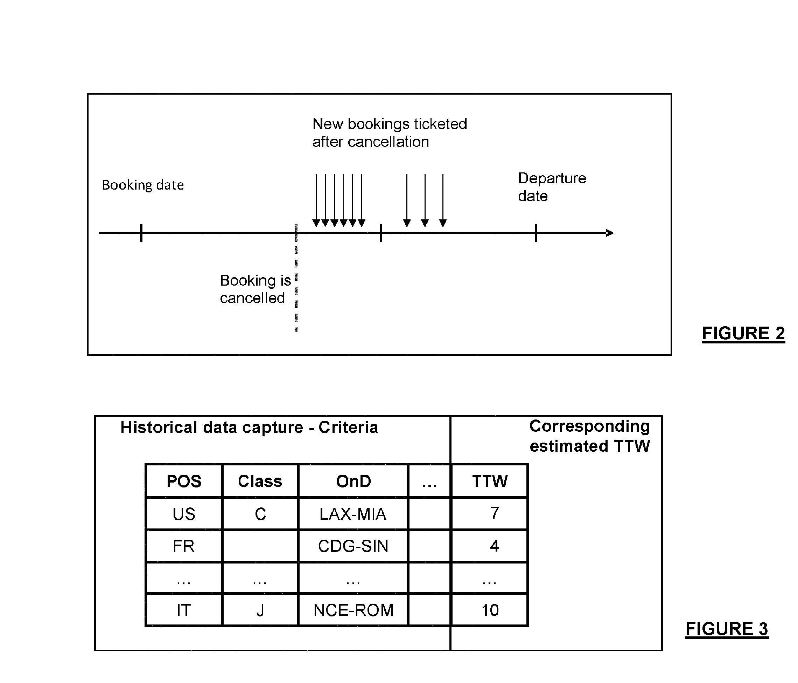

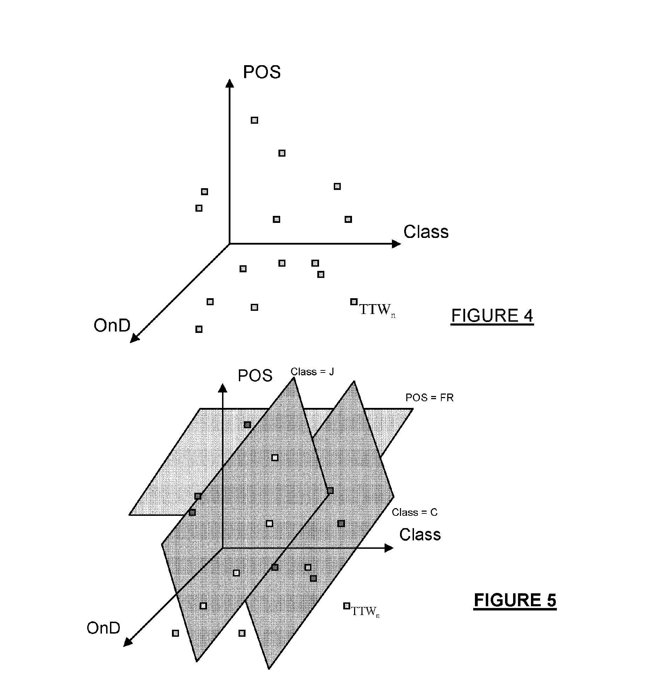

        i. Build a cloud (multi-dimensional space) of TTWs representing ticket issuance occurrence probability (Figure 4);
        ii. Use a criteria selection algorithm to select TLPs with the highest probability to occur and the average associated TTW (Figures 3 and 5);

    b. Determine the content portion of the TLPs;

        i. Estimate the best couple (Time Limit, Option fee) that maximizes a Revenue Gain function; and

3. Finally associate both the TLP application portion and content into a single database. The Inventory System 12, upon request of the Reservation System 14 is then able to return the best time limit and associated fee to the user (e.g. a booking agent), via the Reservation System 14, that matches one of the TLPs. In one aspect an online mode provides the ability to obtain the TL + fee at booking time, while in another aspect an offline mode provides the ability to build the database of TLPs and refresh the TL+Fee.

The Time-to-Ticket Willingness (TTW) is an important aspect of the definition of the Time Limit policy as it is an indication of the Time Limit Policy that maximizes the revenue.
The estimation of the Time-to-Ticket Willingness is achieved by unconstraining the effective ticketing date for a group of criteria values. The effective date is constrained by the Time Limit previously set. By unconstraining the TTW the system ensures the accuracy of the forecasting, that is to say the calculation of the Time Limit and its associated option fee.
Unconstrained data is captured in order to feed the Unconstraining Algorithm used for the TTW determination. Unconstrained data include tickets issued after the original booking was cancelled by the Time Limit and the inventory space released. The issuance of these tickets (Figure 2.) is captured in the historical data which enables cross-referencing the totality of customer behaviour during a booking flow. An important aspect of unconstraining is a desire to capture some or all of the bookings that are made after the time limit (TL) has expired (see Figure 2).
More precisely, the Time Management System has the ability to rebuild the booking and associated ticket issuance histories through passenger behaviours, which is an asset in the computation of the Time-to-Ticket Willingness. This ability relies on a technical capability to correlate different subsets of Reservation System and Inventory System data using different types of passenger-related information data such as, but not limited to, name matching, frequent flyer data, personal informational data (e.g., mobile phone number, email address) and/or passport/ID cards. Correlated bookings and associated tickets represent unconstrained data that are used in the unconstraining algorithm used for the Time to Ticket Willingness determination.
Figure 2 shows an issuance of new bookings after a booking cancellation event both before and after the TTW, and prior to the departure date.
The result of the application of the unconstraining algorithm on historical data is a set of durations in days or days/hours.
Once TTW are estimated, a cloud of Ticket Time Willingness is built and used to determine the Time Limit Policies (TLPs) with the highest probability of occurrence.

Discussed now are Time Limit Policies extraction. It is pointed out that Figures 3-5 present non-limiting examples, and that the various criteria that are discussed below are merely exemplary.

Historical data are extracted and sorted with their estimated TTWs as shown in Figures 3 and 4. As shown in Figure 3, for various points of sale (POS), Classes and Origin and Destination (OnD) there is an associated estimated TTW value (e.g., in days). As shown in Figure 4, the TTWs are represented as a cloud of data in an n-dimensional universe, with n being the total number of criteria. Applied to this cloud is a criteria selection algorithm having a goal of gathering TTWs into subsets. The subsets are defined through the combination of some values of the n criteria, which can be referred to as k-tuples, where k is less than or equal to n. Each k-tuple corresponds to a group of criteria values. A 3-dimensional representation leads to the construction of planes by grouping the TTW subsets (see Figure 5). The k-tuples selected represent then the groups of criteria values for which the Time-to-Ticket Willingness matching the customer demand have the highest number of occurrences. Each set of k-tuples is part of the application portion (a criteria section) of the Time Limit Policies (TLPs). An average Time-to-Ticket Willingness is then estimated per Time Limit Policy.

In general, the goal is to determine those criteria that best influence the TTW among some defined larger number of criteria. The algorithm will return a number of criteria that is less than or equal to the total number of criteria.

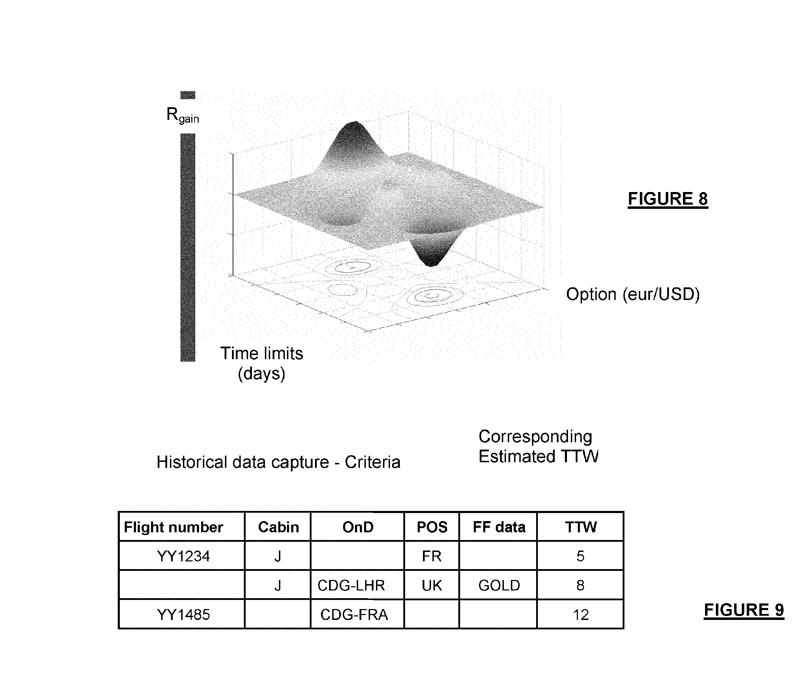

In Figure 5 each plane represents one criterion. In the example of Figure 5 there are three such planes corresponding to a POS criterion, a Class criterion, and an Origin and Destination criterion. Note that the non-limiting example shown in Figure 9 and discussed below happens to use five criteria (Flight Number, Cabin, Origin and Destination, POS and Frequent Flyer (FF) data. In general it may be even more preferred to employ a set of criteria that include at least some of Point of Sale, Frequent Flyer Tier Level, Origin and Destination, Demand Categorization and Load Factor.

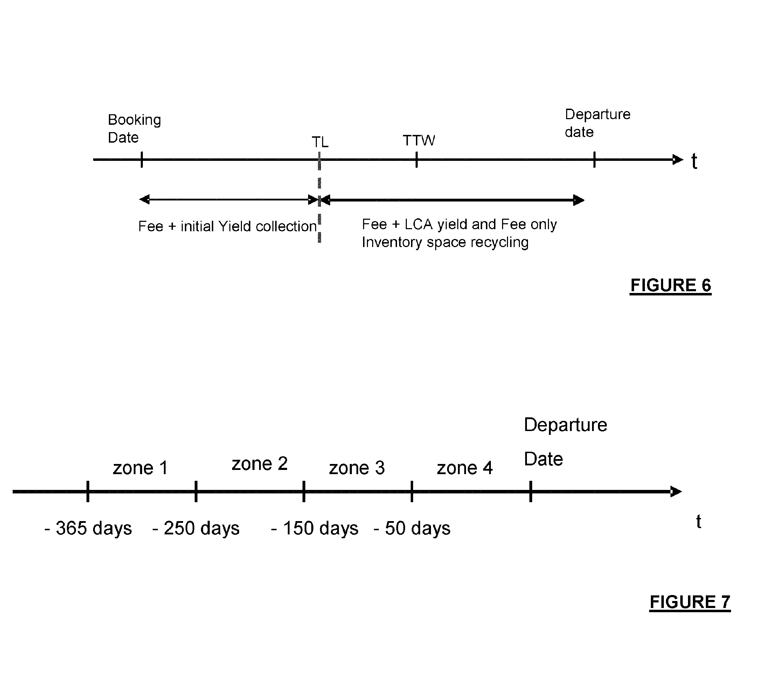

In order to achieve a Global Maximization of the Revenues generated by Time Limits, a revenue function is modelled taking into account the estimated revenue generated. Reference in this regard can be made to Figure 6 for showing different sources of time limit revenues. As can be seen there are bookings ticketed before the time limit (TL) is reached (the airline collects the initial Yield in this class and the associated Fee), there are up-sell ticketed bookings after expiration of the TL (collection of the future Lowest Class Available (LCA) Yield, meaning a lower, higher or equal yield provided by the travel provider in relation to the initial yield and the associated Fee), and finally bookings with no willingness for ticket (collection of fee only). Therefore, the system estimates the best couple (Time Limit, Option Fee), content of the Time Limit Policy, which maximizes the Revenue Gain function.

Once the relevant group of criteria values has been extracted (e.g. Figures 3-5), the determination of the TLPs content values (TL, Fee) is achieved.

One consequence of the foregoing discussion is that the couple (Time Limit, Option Fee) noted (TL, Fee) is selected to maximize future Time Limits revenue based on statistical percentages of the three previously detailed revenues, all relying on historical data.

An aspect of this invention is to provide the optimum couples which maximize the Time Limit revenues. However, Time Limits and passenger behaviours depend on the booking date in relation to the departure date. For example, it is common for the customer to take more time to issue a ticket several months before the actual departure date as compared to immediately before (e.g., two days before) the departure date.

In order to remain consistent the system does not use all data for an entire year before a departure date. In practice, and as is shown in Figure 7, several duration zones (e.g., four duration zones) are defined. Based on this analysis, the number of TLPs is duplicated per the specified number of duration zones and a new couple (TL, Fee) is computed for each duration zone. In general, each zone is determined to provide a period of time in which customer behaviour is consistent, and the TL is thus a function of the zone.

The algorithm is executed in several steps, as follows:

    1. Select a group of criteria values ( a criteria k-tuple) for a defined duration zone;
    2. For each flight/date to operate with;

        a. in order to treat the historical data in the most efficient way, sort the tickets based on their associated booking;
        b. a sort based on the flight/date allows the algorithm to gather several tickets at once;

    3. Restrict to a single class of service;

        a. the Gain Revenue is estimated at the flight/date level while the Yield information is available only at the class of service level;
        b. the Gain Revenue is then computed as an average of the Gain Revenue from each class of service; and

    4. Estimate the Gain Revenue in the selected class;
    5. Repeat the process for each group of criteria values.

A number of parameters are defined for the Gain Revenue function. These parameters are enumerated below.

1. The statistical percentage of tickets issued before expiration of a given time limit

a. Denoted $P_{T<TL}$
b. The number of issued tickets $N_{T<TL}$ in relation to the number of global sales made for a given flight/date/class

2. The statistical percentage of up-sell tickets issued after expiration of a given time limit

a. Denoted $P_{UP}$

b. The number of up-sell tickets $N_{UP}$ issued in relation to the number of global sales made for a given flight/date/class

3. The statistical percentage of cancelled bookings with no willingness of ticket issuance after expiration of a given time limit

a. Denoted $P_{\chi}$

b. The number of cancelled bookings $N_{\chi}$ in relation to the number of global sales made for a given flight/date/class

4. The number of global sales extracted from the historical database

a. Denoted $N_{GS}$
b. Extracted for the selected flight/date/class and in relation to the k-tuple and the duration zone considered

5. The maximal number of booking for a given flight/date/class

a. Denoted $N_{MAX}$
b. This includes overbooking and is forecasted by the Revenue Management System

6. The initial Yield before time limit expiration at booking time

a. Denoted Yield
b. Provided by the travel provider

7. The Lowest Class Available Yield

a. Denoted $Yield_{LCA}$
b. Provided by the travel provider which corresponds to either a lower, higher or equal Yield for this class in relation to the initial Yield.

The Gain Revenue function that is defined for a given flight/date/class applied for a set of k-tuple criteria and a duration zone is:

$$R_{gain_{ij}}(Fee, TL) = N_{MAX_{ij}} \cdot \left[ P_{T<TL_{ij}}(TL) \cdot (Fee + Yield_{ij}(TL)) + P_{UP_{ij}}(TL) \cdot (Fee + Yield_{LCA_{ij}}(TL)) + P_{\chi_{ij}}(TL) \cdot Fee \right]$$

The different statistical percentages follow the subsequent condition:

$$P_{T<TL} + P_{UP} + P_{\chi} = 1.$$

The previous function then becomes:

$$R_{gain_{ij}}(Fee, TL) = N_{MAX_{ij}} \cdot \left[ P_{T<TL_{ij}}(TL) \cdot Yield_{ij}(TL) + P_{UP_{ij}}(TL) \cdot Yield_{LCA_{ij}}(TL) + Fee \right].$$

Each statistical percentage can be represented by its associated number of tickets or bookings

$$P_{T<TL_{ij}} = \frac{N_{T<TL_{ij}}(TL)}{N_{GS_{ij}}}$$

$$P_{UP_{ij}} = \frac{N_{UP_{ij}}(TL)}{N_{GS_{ij}}}$$

$$R_{gain_{ij}}(Fee, TL) = \frac{N_{MAX_{ij}}}{N_{GS_{ij}}} \cdot \left[ N_{T<TL_{ij}}(TL) \cdot Yield_{ij}(TL) + N_{UP_{ij}}(TL) \cdot Yield_{LCA_{ij}}(TL) + Fee \right]$$

The number of classes is dependent on the flight/date characteristics.
Denoted as $C_i$ is the set of classes for a given flight/date I and $Nc_i$ is its dimension.
The Gain Revenue generated for the flight/date is:

$$R_{gain_i}(Fee, TL) = \frac{1}{Nc_i} \cdot \sum_{j \in C_i} R_{gain_{ij}}(Fee, TL).$$

The computation of the Revenue Gain function is preferably based on the average on all classes of services of a given flight/date in order to avoid a situation where flights having a high number of classes of service will have more weight than those with fewer classes of services.
The number of the flight/date is dependent on the k-tuple and the start/end duration.
Denote as FD the set of flight/dates.
For a set of k-tuples in a given duration start/end, the Global Gain Revenue generated for the airline is:

$$R_{gain}(Fee, TL) = \sum_{i \in FD} \frac{1}{Nc_i} \cdot \sum_{j \in C_i} R_{gain_{ij}}(Fee, TL)$$

$$R_{gain}(Fee, TL) = \sum_{i \in FD} \frac{1}{Nc_i} \cdot \sum_{j \in C_i} \frac{N_{MAX_{ij}}}{N_{GS_{ij}}} \cdot \left[ N_{T<TL_{ij}}(TL) \cdot Yield_{ij}(TL) + N_{UP_{ij}}(TL) \cdot Yield_{LCA_{ij}}(TL) + Fee \right]$$

The variation of the couple (Fee, TL) leads to the determination of the maximum of the function of Gain Revenue for the selected set of k-tuples and for the given duration zone. Reference in this regard can be made to Figure 8 which graphically shows a non-limiting example of a Gain Revenue representation and the determination of a couple (TL, Fee) which maximizes the Time Limit revenue.

$$R_{gain}(Fee_0, TL_0) = Max(R_{gain}(Fee, TL)).$$

The couple (Fee$_0$, TL$_0$) that offers the highest revenue for the airline is the content associated to the TLP having an application portion comprising criteria values which correspond to ones from the k-tuple (i.e: the group of criteria values) previously used to filter the eligible tickets.

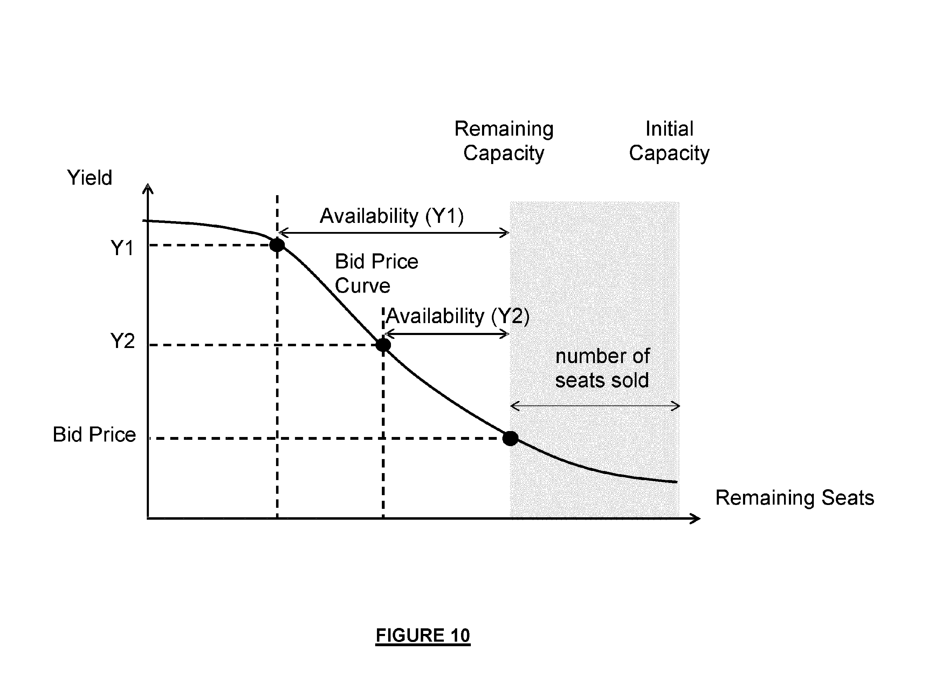

Figure 10 shows a non-limiting example of TLP (an application portion and associated content).

In Figure 8 Time Limit (days) is bounded by the departure date, and the Option$_{Fee}$ is bounded so that Fee<Ticket price (or an estimation thereof).

This estimation of the best couple values is run again for each TLP over each duration zone.

A further aspect of this invention enables a joint estimation to be made of both the time limit and the fee at the same time, which guarantees that the airline can maximize the revenue.

It should be noted that the exemplary embodiments of this invention can be implemented at least in part using the Time Management System 10 shown in Figure 1. Note further that the Time Management System 10 can be implemented as an add-on value-added service for a travel provider (e.g., airline), and furthermore can be modified or customized depending on the needs of the airline.

For example, a particular airline user of the Time Management System 10 can implement a reduced complexity version of the Time Management System engine by applying specific limits to applicable fees or to time limits. Further, a particular airline user of the Time Management System 10 can request to block one parameter and only provide the best (next) value which maximizes the revenue by providing the best time limits for a given fee, or providing the best fee for a given time limit. One result is a decrease in the number of potential variations of the couple (TL, Fee) which in turn increases the estimation speed of the TLPs.

A non-limiting example of the utility and technical effects that are obtained by the use of this invention is now provided.

Universe definition

The following is an illustration of the previous algorithm applied to a cloud of TTW that are restricted to few criteria. In this non-limiting example, the criteria are (see also Figure 9):

The Flight number;
The POS which has requested the booking;
The OnD;
Frequent Flyer (FF) data; and
The Cabin

The eligible tickets are assumed in this example to be restricted or constrained to the duration zone of booking dates between three months and one month prior to the departure date.

Time-to-Ticket Willingness estimation and TLPs computation

Based on the Unconstraining Algorithm, different Time-to-Ticket Willingness are estimated in the duration zone selected. The resulting cloud of TTWs is used by the Criteria Selection algorithm to determine from the subset of criteria those which represent the highest probabilities of occurrence of a ticket.

In this example, the Time Limit Policies (TLPs) shown in Figure 9. For each TLP the system computes the best couple (TL, Fee) which maximizes the airline Time Limit revenue. For instance, for the first TLP the eligible tickets and bookings to be considered are bookings for flight number YY1234, bookings made from the French market (POS=FR), and first class only (cabin J).

Revenue Gain Algorithm application

The algorithm described above is applied to compute the revenue gain at flight/date level, estimated at a class of service.

Due to the flight number criteria of the TLP the extraction is restricted to flight/dates related to YY1234. Therefore, the system will extract only tickets and bookings for any flight/date for which the booking date is in the duration zone previously specified.

Discrete Revenue Gain values computation

For the first flight/date selected, the cabin J is divided into 3 classes F, J and P. The revenue gain is computed for each class of service and an average, at cabin level, is computed noted as $R_{gain}$(TL, Fee). This action is performed on all flight/dates present and a Global Revenue Gain for a given couple (TL, Fee) is computed.

A feature of this invention is a joint estimation of a best couple (TL, Fee) which maximizes the revenue, and the system applies independent variations on the time limit and on the fee to establish a discrete representation of the revenue gain. The maximum is obtained from an enumeration computation.

Potential airline calculation boundaries

The airline has the possibility to apply specific limits (constraints) to both values (TL, Fee). For example, the airline can choose to restrict or constrain the value of the fee to 50 euros and/or the airline can choose that for a particular duration zone the time limit (TL) will never exceed 20 days after booking.

If such constraints and limits are applied by the airline then the speed of the computation of the TLPs can be increased.

As should be realized the Time Management System 10, the Inventory System 12, the Reservation System 14 and the Revenue Management System 16 can each comprise at least one data processor operating under control of software instructions stored in at least one memory. The Time Management System 10, the Inventory System 12, the Reservation System 14 and the Revenue Management System 16 can be implemented as respective servers that are geographically distributed and interconnected via any type of suitable data communication network.

The foregoing description has provided by way of exemplary and non-limiting examples a full and informative description of various method, apparatus and computer program software for implementing the exemplary embodiments of this invention. However, various modifications and adaptations may become apparent to those skilled in the relevant arts in view of the foregoing description, when read in conjunction with the accompanying drawings and the appended claims. As but some examples, the use of other similar or equivalent algorithms and data representations may be attempted by those skilled in the art. Further, the various names used for the different elements, functions and algorithms (e.g., Time Management System, Time-to-Ticket Willingness, Time Limit, Option Fee, Unconstraining algorithm, etc.) are merely descriptive and are not intended to be read in a limiting sense, as these various elements, functions and algorithms can be referred to by any suitable names. All such and similar modifications of the teachings of this invention will still fall within the scope of the embodiments of this invention.

Furthermore, while described above primarily in the context of travel solutions provided by airlines (air carriers), those skilled in the art should appreciate that the embodiments of this invention are not limited for use only with airlines, but could be adapted as well for use with other types of travel modalities and travel providers including, as non-limiting examples, providers of travel by ship, train, motorcar, bus and travel products such as hotels.

Further, and while described above in the context of a non-real time processing by the Time Management System 10 and the periodic downloading to the Inventory System 12 of the Time Limit Policy data, the computation of at least one applicable Time Limit Policy including the couple (Time Limit, Option Fee) could be performed upon a request made by another part of the system such as an administrator or the Inventory System 12. As was noted previously, in one aspect the invention provides an online mode having an ability to obtain the TL + fee at booking time, while in another aspect the invention provides an offline mode having an ability to build the database of TLPs and refresh the TL+Fee.

Furthermore, some of the features of the exemplary embodiments of this invention may be used to advantage without the corresponding use of other features. As such, the foregoing description should be considered as merely illustrative of the principles, teachings and embodiments of this invention, and not in limitation thereof.

**Claims**

1. A computer-implemented method to generate travel booking option related data, comprising a step of:

   calculating a time limit value for an option to reserve a travel reservation for some period of time, without making a payment to issue a ticket, and also calculating an option fee amount, where the time limit value and the option fee amount are jointly calculated to maximize a revenue gain of the travel provider.

2. The method of claim 1 further comprising the steps of:

   - establishing a plurality of criteria associated with travel bookings of a travel provider;
   - defining a group of criteria values, where each of said criteria is selected among the plurality of criteria and where each criteria value is a value of one of said criteria for some of the travel bookings;
   - computing the time limit value and the option fee amount based on the group of criteria values.

3. The method of claim 2 where the plurality of criteria comprises one or more of at least Point of Sale, Frequent Flyer Tier Level, Origin and Destination, Demand Categorization and Load Factor.

4. The method of claim 2 wherein the step of defining a group of criteria values and the step of computing the time limit value and the option fee amount are repeated for plural groups of criteria values.

5. The method of claim 2 where the plurality of criteria are derived from Reservation-related data, Inventory-related data and Revenue-related data.

6. The method of claim 4 further comprising the steps of:

- creating a Time Limit Policy for each group of criteria values;
- for each Time Limit Policy:

i) determining an application portion of said Time Limit Policy where said application portion comprises at least some of the values of said group of criteria values;
ii) determining a content portion of said Time Limit Policy where the content portion comprises the time limit value and the option fee amount computed for said group of criteria values.

7. The method of claim 6 storing the Time Limit Policies in a database that is accessible by an inventory system of the travel provider.

8. The method of claim 6 where each group of criteria values is used at least in part to estimate a willingness of a passenger to confirm/pay for the booking and where the estimation of the willingness of a passenger to confirm/pay for the booking is performed using an unconstraining algorithm.

9. The method of claim 8 where calculating is performed separately for at least two consecutive periods prior to a departure date each having a different estimated willingness of a passenger to confirm/pay for the booking.

10. The method of claim 9 where calculating is comprised of estimating a Time-to-Ticket Willingness (TTW) for individual ones of sets of historical data, each set of historical data being for one single period.

11. The method of claim 10 where the historical data is comprised of, for a particular group of criteria values, tickets issued after an original booking was cancelled by a time limit expiring and the inventory space released, and where determining the application portion is comprised of building a multi-dimensional space of TTWs that represent ticket issuance occurrence probabilities, and selecting Time Limit Policies with the highest probability to occur and the average associated TTW, and where determining the content portion is comprised of estimating a best couple (Time Limit value, Option Fee amount) which maximizes future revenue gain of the travel provider.

12. The method of claim 2 where calculating comprises placing one or more constraints on the time limit value and the option fee amount in order to more quickly perform the calculation.

13. The method of claim 1 where the time limit value and the option fee amount are updated periodically or upon request of an administrator, and where calculating is performed at a Time Management System, and further comprising, periodically or upon request of an administrator, sending data from an Inventory System of the travel provider to the Time Management System comprising Reservation-related data, Inventory-related data and Revenue-related data from which the plurality of criteria are derived, and comprising sending periodically or upon request of an administrator data from the Time Management System to the Inventory System comprising calculated time limit values and option fee amounts for storage at the Inventory System for use in responding to inquiries for travel reservation.

14. The method of claim 1 further comprising, in response to an inquiry for a travel reservation for a passenger, offering to reserve the travel reservation for the calculated time limit value and for the option fee amount, and where the step of calculating is performed in an offline mode and where offering to reserve the travel reservation is performed in real time upon reception of the inquiry.

15. The method of claim 7 comprising:

- receiving an inquiry for a travel reservation at the inventory system;
- deriving inquiry parameters from the inquiry;
- retrieving from the database the content portion of a time limit policy having an application portion matching the inquiry parameters;

- returning from said content portion the calculated time limit value and the option fee amount.

**16.** A non-transitory computer-readable medium that contains software program instructions, where execution of the software program instructions by at least one data processor results in performance of operations that comprise execution of the method as in any one of claims 1-15.

**17.** A computer-implemented travel reservation and booking system comprising means for executing the method of any of claims 1-15.

FIGURE 1

New bookings ticketed
after cancellation

Booking date

Departure
date

Booking is
cancelled

**FIGURE 2**

| Historical data capture - Criteria | | | | Corresponding estimated TTW |
|---|---|---|---|---|
| POS | Class | OnD | ... | TTW |
| US | C | LAX-MIA | | 7 |
| FR | | CDG-SIN | | 4 |
| ... | ... | ... | | ... |
| IT | J | NCE-ROM | | 10 |

**FIGURE 3**

FIGURE 4

FIGURE 5

Booking
Date

Departure
date

TL TTW

———|———————————|——————————|———————————|————————▶ t

◀————————————————————▶◀————————————————————————▶

Fee + initial Yield collection | Fee + LCA yield and Fee only
Inventory space recycling

<u>FIGURE 6</u>

Departure

zone 1     zone 2    zone 3     zone 4    Date

———————|————————|————————|————————|————————————▶

- 365 days   - 250 days    - 150 days   - 50 days                          t

<u>FIGURE 7</u>

19

**FIGURE 8**

R$_{gain}$

Option (eur/USD)

Time limits
(days)

Historical data capture - Criteria

Corresponding
Estimated TTW

| Flight number | Cabin | OnD | POS | FF data | TTW |
|---|---|---|---|---|---|
| YY1234 | J | | FR | | 5 |
| | J | CDG-LHR | UK | GOLD | 8 |
| YY1485 | | CDG-FRA | | | 12 |

**FIGURE 9**

FIGURE 10

Europäisches
Patentamt

European
Patent Office

Office européen
des brevets

# EUROPEAN SEARCH REPORT

Application Number

EP 11 30 6372

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | A notorious computer system, as known before the priority date of the application, is considered relevant prior art in respect of which an inventive step cannot be acknowledged. The claimed subject matter, with due regard to the description and drawings, relates inter alia to processes comprised in the list of subject matter and activities excluded from patentability under Art. 52(2) and (3) EPC. The Applicant is advised that in accordance with the established practice of the EPO no search need be performed in respect of those aspects of the invention. The only identifiable technical aspects of the claimed invention relate to the use of conventional, general purpose data processing technology for processing data of an inherently non-technical nature. The information technology employed is considered to have been generally known as it was widely available to everyone at the date of filing/priority of the present application. The notoriety of such prior art cannot reasonably be contested. Accordingly, no documentary evidence is considered required, as the technical aspects identified in the present application (Art. 92 EPC) are considered part of the common general knowledge. For further details see the Notice from the European Patent Office dated 1 October 2007 (OJ 11/2007; p594-600) and the accompanying opinion.<br>----- | 1-17 | INV.<br>G06Q50/00<br>G06Q30/00<br><br><br>TECHNICAL FIELDS SEARCHED (IPC)<br><br>G06Q |

The present search report has been drawn up for all claims

| Place of search | Date of completion of the search | Examiner |
|---|---|---|
| Munich | 16 December 2011 | González, Gonzalo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 9829840 A1